Europäisches Patentamt

European Patent Office

Office européen des brevets

(11) Veröffentlichungsnummer: **0 226 920**
A2

(12) **EUROPÄISCHE PATENTANMELDUNG**

(21) Anmeldenummer: 86116996.9

(22) Anmeldetag: 06.12.86

(51) Int. Cl.⁴: **F 24 D 3/00**
**F 24 D 19/10**

(30) Priorität: 19.12.85 DE 3544905

(43) Veröffentlichungstag der Anmeldung:
01.07.87 Patentblatt 87/27

(84) Benannte Vertragsstaaten:
AT BE CH FR GB LI LU NL SE

(71) Anmelder: Rheinisch-Westfälisches Elektrizitätswerk Aktiengesellschaft
Kruppstrasse 5
D-4300 Essen 1(DE)

(72) Erfinder: Göricke, Peter, Dipl.-Ing.
Grafschafter Strasse 113
D-4100 Duisburg 74(DE)

(72) Erfinder: Kalischer, Peter, Dipl.-Ing.
Mendener Strasse 22
D-4330 Mülheim(DE)

(72) Erfinder: Kimpenhaus, Wolfgang
Am Sonnenhang 38
D-4020 Mettmann(DE)

(72) Erfinder: Picken, Günter, Dipl.-Ing.
Schieferbank 35
D-5820 Gevelsberg-Silschede(DE)

(72) Erfinder: Pottbrock, Ralf, Dipl.-Ing.
Heisenbergstrasse 23
D-4330 Mülheim(DE)

(74) Vertreter: Andrejewski, Walter et al,
Theaterplatz 3 Postfach 100254
D-4300 Essen 1(DE)

(54) Verfahren zur Regelung einer bivalenten Heizungseinrichtung.

(57) Verfahren zur Regelung einer bivalenten Heizungseinrichtung mit Heizkesselanlage mit von einem Heizkesselthermostaten überwachtem Brenner, Mischventil mit Mischventilstellmotor, mit der Heizkesselanlage über das Mischventil verbundenem Wärmeverteilungssystem, Wärmepumpenanlage und elektronischer, witterungsgeführter Regeleinrichtung. Die Regeleinrichtung regelt abhängig von der Außenlufttemperatur nach einem von einer Heizkurve eingestellten Sollwert die Heizwasservorlauftemperatur des Wärmeverteilungssystems, wobei der Heizwasserrücklauf über die Wärmepumpenanlage dem Mischventil zugeführt ist. Die Wärmepumpe ist aktivierbar und desaktivierbar. Ferner wird der Mischventilstellmotor von Aufimpulsen und Zuimpulsen eines Reglers der Regeleinrichtung bis in eine Aufstellung bzw. bis in eine Zustellung gesteuert. Sowohl die Wärmepumpenanlage als auch der Brenner der Heizkesselanlage werden von den Aufimpulsen bzw. Zuimpulsen des Reglers für den Mischventilstellmotor (mittelbar oder unmittelbar) gesteuert. Bei durch das Mischventil ausgeschaltetem Brenner wird die Wärmepumpenanlage in Übereinstimmung mit Stellungen des Mischventils und damit nach Maßgabe des Wärmebedarfes des Wärmeverteilungssystems aktiviert und desaktiviert. Durch Sonderstellungen des Mischventils wird der Brenner zugeschaltet bzw. abgeschaltet, und zwar durch eine Offenstellung des Mischventils, welche die Wärmeabgabe der Wärmepumpe über die Regeleinrichtung durch Anheben der Heizwasservorlauftemperatur nicht mehr beseitigen kann, zugeschaltet, durch eine Zustellung abgeschaltet.

EP 0 226 920 A2

86116996.9
0226920

**Andrejewski, Honke & Partner, Patentanwälte in Essen**

Verfahren zur Regelung einer bivalenten Heizungseinrichtung

Beschreibung:

Die Erfindung bezieht sich gattungsgemäß auf ein Verfahren zur
Regelung einer bivalenten Heizungseinrichtung mit Heizkesselanlage
mit von einem Heizkesselthermostat überwachtem Brenner, Mischventil
und Mischventilstellmotor, mit der Heizkesselanlage über das Mischventil verbundenem Wärmeverteilungssystem, Wärmepumpenanlage und
elektronischer, witterungsgeführter Regeleinrichtung, welche Regeleinrichtung abhängig von der Außenlufttemperatur nach einem von
einer Heizkurve eingestellten Sollwert die Heizwasservorlauftemperatur
des Wärmeverteilungssystems regelt, wobei der Heizwasserrücklauf
über die Wärmepumpenanlage dem Mischventil zugeführt ist, wobei
die Wärmepumpe aktivierbar und desaktivierbar ist und wobei fernerhin der Mischventilstellmotor von Aufimpulsen und Zuimpulsen eines
Reglers der Regeleinrichtung nach Maßgabe der Abweichungen des
Istwertes vom Sollwert bis in eine Aufstellung bzw. bis in eine Zustellung gesteuert wird.

Bei dem (aus der Praxis) bekannten gattungsgemäßen Verfahren wird
einerseits mit einer konventionellen Regeleinrichtung des beschriebenen
Aufbaues für die Heizkesselanlage gearbeitet. Sie steuert die Wärmepumpenanlage und den Brenner nicht. Zusätzlich ist eine selbständige
Regeleinrichtung für die Wärmepumpenanlage installiert. Die konventionelle Regeleinrichtung für die Heizkesselanlage sowie die Regeleinrichtung für die Wärmepumpenanlage werden in der Nähe des sogenannten Gleichgewichtspunktes der Wärmepumpe, wo die Wärmepumpe
den Wärmebedarf des Wärmeverteilungssystems nicht mehr deckt bzw.
wo die Zuschaltung des Heizkessels erforderlich ist oder wo mit Heizkesselbetrieb gefahren werden muß, entsprechend geschaltet. Das ist
aufwendig und in regeltechnischer Hinsicht nicht problemlos. Im einzelnen ist zu den bekannten Maßnahmen folgendes zu sagen: Die Aufimpulse und die Zuimpulse, die den Mischventilstellmotor der konventionellen Regeleinrichtung für die Heizkesselanlage beaufschlagen, be-

2

sitzen eine Impulsfrequenz, die abhängig von der Größe der Regelabweichung ist. Liegt eine positive Regelabweichung vor, d. h. ist der Sollwert größer als der Istwert, so wird der Mischventilstellmotor aufgefahren. Liegt eine negative Regelabweichung vor, ist also der Sollwert kleiner als der Istwert, so wird der Mischventilstellmotor zugefahren. In den jeweiligen Endstellungen des Mischventilstellmotors werden die entsprechenden Aufimpulse bzw. Zuimpulse von sogenannten Endschaltern unterbrochen. Es werden dann nur noch Impulse wirksam, die den Mischventilstellmotor und damit das Mischventil wieder aus der jeweiligen Endstellung herausfahren lassen. Je nach Ausführung der Regeleinrichtung insgesamt werden zusätzlich zum Mischventil eine Heizungsumwälzpumpe und der Brenner der Heizkesselanlage außentemperaturabhängig zu- oder abgeschaltet. Während bei einer Zuschaltung der Heizungswärmepumpe diese ständig in Betrieb bleibt, wird der Betrieb des Brenners von einem Heizkesselthermostaten gesteuert, der die Temperatur des im Heizkessel befindlichen Heizwassers auf eine eingestellte Temperatur regelt. Die zusätzliche selbständige Regeleinrichtung für die Wärmepumpe ist regeltechnisch ähnlich aufgebaut.

Der Erfindung liegt die Aufgabe zugrunde, ein Verfahren anzugeben, mit dem unter Verzicht auf eine besondere Regeleinrichtung für die Wärmepumpe mit einer konventionellen Regeleinrichtung für eine Heizkesselanlage die bivalente Heizungseinrichtung einwandfrei geregelt werden kann. Insbes. soll bei Umbau einer Heizkesselanlage zu einer bivalenten Heizungseinrichtung mit zusätzlicher Wärmepumpe auf die bestehende konventionelle Regeleinrichtung der Heizkesselanlage zurückgegriffen werden können.

Zur Lösung dieser Aufgabe lehrt die Erfindung, daß sowohl die Wärmepumpenanlage als auch der Brenner der Heizkesselanlage von

3

den Aufimpulsen bzw. den Zuimpulsen des Reglers für den Mischventilstellmotor (mittelbar oder unmittelbar) gesteuert werden, daß bei durch das Mischventil ausgeschaltetem Brenner die Wärmepumpenanlage in Übereinstimmung mit Stellungen des Mischventils und damit nach Maßgabe des Wärmebedarfes des Wärmeverteilungssystems aktiviert und desaktiviert wird, und daß durch Sonderstellungen des Mischventils der Brenner zugeschaltet bzw. abgeschaltet wird, und zwar durch eine Offenstellung des Mischventils, welche die Wärmeabgabe der Wärmepumpe über die Regeleinrichtung durch Anheben der Heizwasservorlauftemperatur nicht mehr beseitigen kann, zugeschaltet, durch eine Zustellung abgeschaltet wird. Das kann dadurch erfolgen, daß die Wärmepumpenanlage unmittelbar durch Stellung des Mischventils aktiviert und desaktiviert wird. Eine bevorzugte Ausführungsform der Erfindung ist dadurch gekennzeichnet, daß die Wärmepumpenanlage von Aufimpulsen bzw. Zuimpulsen des Reglers in Übereinstimmung mit Stellungen des Mischventils aktiviert und desaktiviert wird. Es versteht sich, daß im Rahmen der erfindungsgemäßen Maßnahmen der Brenner im übrigen in der beschriebenen Weise von einem Heizkesselthermostat überwacht ist. Im allgemeinen wird man die Wärmepumpe von dem Mischventil über ein Verzögerungsglied desaktivieren. Diese bewirkt, daß die Wärmepumpe erst nach einer bestimmten Nachlaufzeit von beispielsweise zehn bis fünfzehn Minuten abschaltet, wodurch vermieden wird, daß in diesem Umschaltbereich ein häufiges, gleichsam schwingungsmäßiges Schalten erfolgt. Entsprechend empfiehlt es sich, den Brenner der Heizkesselanlage über ein Verzögerungsglied zuzuschalten.

Für die praktische Durchführung bestehen im Rahmen der Erfindung verschiedene Möglichkeiten. In der Ausführungsform für eine Schaltungsanordnung, bei der das Mischventil und/oder der Mischventil-

4

stellmotor Endschalter für die Zustellung sowie die Aufstellung des Mischventils aufweisen, wie es bei konventionellen Regeleinrichtungen für Heizkesselanlagen üblich ist, lehrt die Erfindung, daß von den Endschaltern elektrische Steuerimpulse abgenommen und von diesen die Wärmepumpenanlage sowie der Brenner gesteuert werden. In der Ausführungsform für eine Schaltungsanordnung mit an das Mischventil und/oder den Mischventilstellmotor angeschlossener Steuerwelle besteht die Möglichkeit, von der Steuerwelle ein Schaltwerk mit Steuerkontakten für die elektrische Steuerung der Wärmepumpenanlage bzw. des Brenners zu betätigen. In der Ausführungsform, bei der die Wärmepumpenanlage mittelbar von Aufimpulsen bzw. Zuimpulsen des Reglers aktiviert bzw. desaktiviert wird, lehrt die Erfindung, daß für die elektrische Steuerung der Wärmepumpenanlage bzw. des Brenners ein elektrisch angetriebenes Schrittschaltwerk vorgesehen und dieses von den Aufimpulsen bzw. Zuimpulsen des Reglers parallel zum Mischventilstellmotor gesteuert wird.

Die Erfindung nutzt die Erkenntnis, daß der Regler für den Mischventilstellmotor mit seinen Zuimpulsen und Aufimpulsen bzw. das Mischventil der eingangs beschriebenen konventionellen Heizkesselregelung zusätzliche Funktionen erfüllen können, nämlich die der Steuerung der Wärmepumpe und in besonderer Kombination dazu die Steuerung des Brenners, wobei die Regeleinrichtung ihre Funktion im Rahmen der bivalenten Heizungseinrichtung erfüllt, und zwar sowohl bei parallelem, bei teilparallelem als auch bei alternativem Betrieb. Das wird im folgenden anhand einer lediglich ein Ausführungsbeispiel darstellenden Zeichnung ausführlicher erläutert. Es zeigen in schematischer Darstellung

Fig. 1 das Schema einer Heizungseinrichtung, die für das erfindungsgemäße Verfahren eingerichtet ist,

5

Fig. 2 schaltungstechnische Einzelheiten für die Ausführungsform mit einer Schaltungsanordnung, bei der das Mischventil und/oder der Mischventilstellmotor Endschalter für die Zustellung sowie die Aufstellung des Mischventils aufweisen,

Fig. 3 weitere Einzelheiten aus dem Gegenstand nach Fig. 2,

Fig. 4 schaltungstechnische Einzelheiten für die Ausführungsform mit an das Mischventil und/oder den Mischventilstellmotor angeschlossener Steuerwelle,

Fig. 5 weitere Einzelheiten aus dem Gegenstand der Fig. 4.

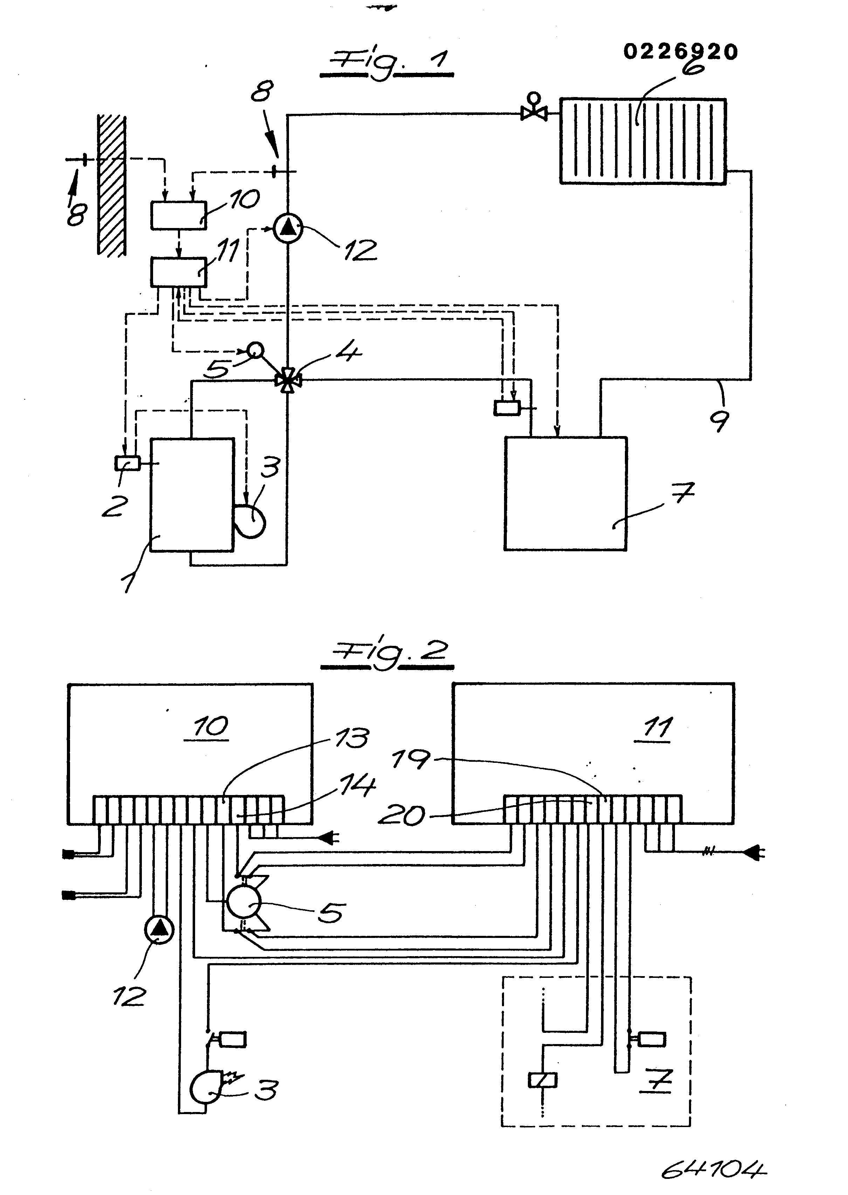

Die in Fig. 1 dargestellte Heizungseinrichtung besteht aus einer Heizkesselanlage 1 mit einem von einem Heizkesselthermostaten 2 gesteuerten und überwachten Brenner 3, einem Mischventil 4 und einem Mischventilstellmotor 5. Die Heizkesselanlage 1 ist über das Mischventil 4 mit einem Wärmeverteilungssystem 6 verbunden. Außerdem ist eine Wärmepumpenanlage 7 vorgesehen. Man erkennt fernerhin eine elektronische, witterungsgeführte Regeleinrichtung mit Temperaturfühlern 8. Das Schema erläutert insoweit zunächst die Zusammenschaltung der Bauteile und Aggregate. Die Regeleinrichtung regelt abhängig von der Außenlufttemperatur nach einem von einer Heizkurve eingestellten Sollwert die Heizwasservorlauftemperatur des Wärmeverteilungssystems 6. Der Heizwasserrücklauf 9 ist über die Wärmepumpenanlage 7 dem Mischventil 4 zugeführt. Die Regeleinrichtung besitzt einen Regler 10, der durch Aufimpulse und Zuimpulse den Mischventilstellmotor 5 steuert. Erfindungsgemäß wird durch Stellungen des Mischventils 4 mittelbar

Andrejewski, Honke & Partner, Patentanwälte in Essen

6

oder unmittelbar die Wärmepumpenanlage 7 nach Maßgabe des Wärmebedarfes des Wärmeverteilungssystems 6 aktiviert und desaktiviert.
Durch Sonderstellungen wird der Brenner 3 zu- oder abgeschaltet. Das
geschieht mit Hilfe besonderer Maßnahmen, für die im Schema der
Fig. 1 das Aggregat 11 vorgesehen ist, dessen Funktionen weiter
unten erläutert werden. - Es versteht sich, daß das Wärmeverteilungssystem eine Heizungsumwälzpumpe 12 aufweist.

Bei konventionellen Heizungseinrichtungen gibt die Regeleinrichtung
als Ausgangssignale, abhängig vom Vorzeichen und der Höhe der Regelabweichung zwischen Istwert und Sollwert der Heizwasservorlauftemperatur, Impulse an den Mischventilstellmotor 5 ab. Hierdurch wird
das Mischventil 4 in Richtung "Auf" oder "Zu" gefahren. Die Erfindung
macht sich diese Impulse unmittelbar oder mittelbar zunutze und regelt
abhängig hiervon sowohl die Wärmepumpenanlage 7 als auch zusätzlich
den Brenner 3. Hierbei werden zwei Möglichkeiten genutzt, und zwar

1) Überwachung der Endschalter 13, 14 am Mischventil 4 bzw.
   am Mischventilstellmotor 5 und hieraus abgeleitetes Zu- und
   Abschalten von Wärmepumpenanlage 7 und Brenner 3 (Fig. 2
   und 3),

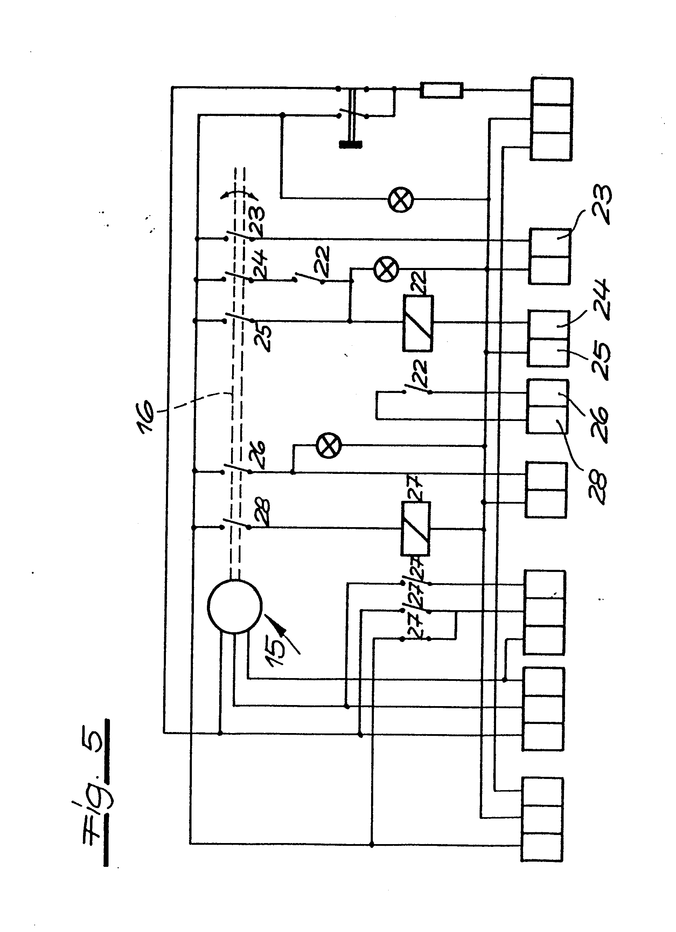

2) direkte Interpretation der Stellung des Mischventils 4 und
   damit der Impulse mittels eines Schaltwerkes 15 mit
   Steuerwelle 16 und Zu- und Abschalten von Wärmepumpenanlage 7 und Brenner 3 von der Stellung der Steuerwelle
   16 (Fig. 4 und 5).

Diese beiden Prinzipien werden nachfolgend funktionell und schaltungsgemäß erläutert.

7

## Ausführungsbeispiel 1:

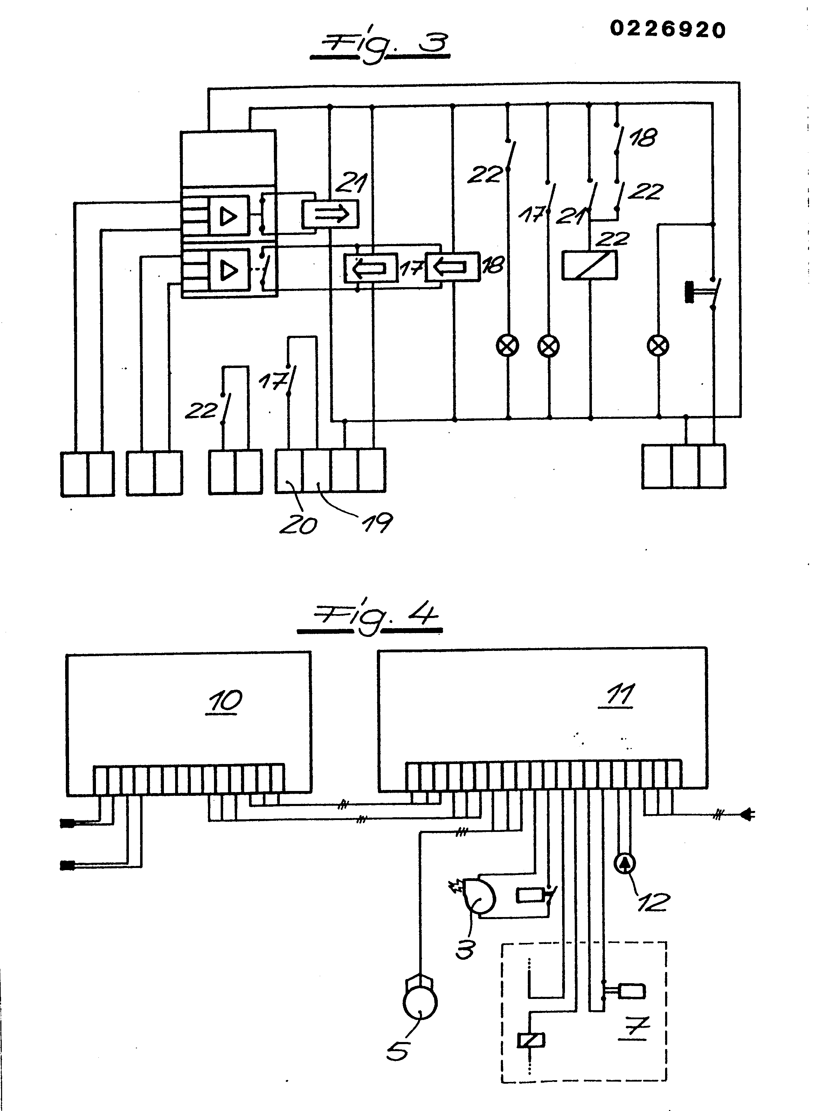

Die in den Fig. 2 und 3 erläuterte Regelung ist derart angelegt, daß bei einer konventionellen Heizungsregelung möglichst wenig Eingriffe nötig sind. Die Regelung stellt ein teilweise unterlagertes Regelungssystem dar, da lediglich die Endschalter 13, 14 des Mischventilstellmotors 5 überwacht werden und die Brennerfreigabe direkt erteilt wird (Fig. 2). Die Überwachung der Endschalter 13, 14 erfolgt mittels einer elektronischen Sende/Empfang-Einrichtung, die in 11 untergebracht ist und die ein hochfrequentes Kleinspannungssignal (z. B. 50 kHz) über den entsprechenden Endschalter 13, 14 führt (Fig. 2). Die Ein/Aus-Schaltfunktion bezüglich der Wärmepumpenanlage 7 wird prinzipiell über den Endschalter 13 des Mischventilstellmotors 5 in "Zu"-Stellung gesteuert. Bei der Erläuterung soll als Ausgangszustand das Mischventil 4 völlig geschlossen sein, d. h. der Endschalter 13 ist geöffnet. Die Wärmepumpenanlage 7 ist ausgeschaltet:

Wird bei der konventionellen Heizungsregelung Wärme angefordert, so fährt das Mischventil 4 aus der "Zu"-Stellung heraus. Dadurch schließt der Endschalter 13 und veranlaßt dadurch die Elektronik die Verzögerungsglieder 17 und 18 zu aktivieren (18 ist nur für die Heizkesselsteuerung wichtig; die Schaltfunktion wird später erläutert). 17 ist ein Verzögerungsglied, welches unmittelbar anzieht. Die Wärmepumpenanlage 7 wird über den Kontakt von 17 zugeschaltet (Klemme 19, 20). Ist die Wärmepumpenanlage in der Lage, den Heizwärmebedarf des Gebäudes zu decken, so wird nach einer gewissen Zeit die konventionelle Heizungsregelung das Mischventil 4 wieder zufahren, bis der Endschalter 13 erneut öffnet. Das Verzögerungsglied 17 schaltet die

Andrejewski, Honke & Partner, Patentanwälte in Essen

- 8

Wärmepumpe jedoch erst nach einer Nachlaufzeit von 10 bis 15 Minuten ab. Dies ist zur Vermeidung von häufigem Schalten notwendig. Der Ausgangszustand ist wieder erreicht. Der oben beschriebene Vorgang setzt sich zyklisch fort. Bei evtl. zu geringem Heizwasservolumenstrom oder zu hoher Rücklauftemperatur wird das Verzögerungsglied 17 über einen am Kondensatorausgang der Wärmepumpe zu installierenden Sicherheitstemperaturbegrenzer desaktiviert. Diese Einrichtung dient zur Vermeidung von Hochdruckstörungen sowie Abschaltung der Wärmepumpenanlage 7 aufgrund zu hoher Heizwasserrücklauftemperatur.

Ist die Wärmepumpenanlage 7 nicht mehr in der Lage, den Wärmebedarf des Gebäudes allein zu decken, so wird der Sollwert der Heizwasservorlauftemperatur nicht mehr erreicht. Demzufolge wird das Mischventil 4 trotz ständig laufender Wärmepumpenanlage 7 - Endschalter 13 ist immer geschlossen - immer weiter aufgefahren. Liegt nicht nur eine kurzzeitig geringe, sondern eine längere und deutlichere Unterdeckung des Heizwärmebedarfes vor, so wird das Mischventil 4 nach einiger Zeit völlig in "Auf"-Stellung fahren und der Endschalter 14 wird geöffnet. Hierdurch wird das Verzögerungsglied 21 aktiviert. Da es sich bei dem Verzögerungsglied 21 um ein anzugverzögertes oder vorlaufendes Verzögerungsglied 21 handelt, wird es erst nach einer vorgewählten Zeit von z. B. 60 bis 90 Minuten anziehen und über das Verzögerungsglied 21 wird das Relais 22 aktiviert. Relais 22 geht über den Kontakt von Verzögerungsglied 18 in Selbsthaltung und gibt den Brenner 3 der Heizkesselanlage 1 über den Kesselthermostaten 2 frei. Bei zusätzlichem Brennerbetrieb - paralleler Betrieb - wird das Mischventil 4 in eine dem Sollwert der Heizwasservorlauftemperatur entsprechende Stellung fahren. Relais 22 bleibt über die Selbsthaltung aktiviert, d. h. Wärmepumpenanlage 7 und Heizkesselanlage 1 werden parallel betrieben. Wird die Wärmepumpenanlage 7 desaktiviert (z. B.

durch EVU-Sperrzeiten, zu hohe Heizwasserrücklauftemperatur, zu geringen Heizwasservolumenstrom, minimale Wärmequellentemperatur), so wird die Heizkesselanlage 1 automatisch die volle Wärmebedarfsdeckung übernehmen. Falls die Wärmepumpenanlage 7 durch Fortfall der entsprechenden Abschaltkriterien wieder in Betrieb geht - der Endschalter 13 ist weiterhin geschlossen und somit die Wärmepumpenanlage 7 weiterhin freigegeben - wird automatisch das Mischventil 4 die Rücklauftemperaturanhebung wieder ausregeln. Es ist im Ergebnis sowohl ein paralleler, ein teilparalleler als auch ein alternativer Betrieb zwischen Wärmepumpenanlage 7 und Heizkesselanlage 1 möglich. Falls bei bestehendem Parallelbetrieb die Wärmepumpenanlage 7 z. B. durch Anstieg der Außentemperatur erneut in die Lage versetzt wird, den Heizwärmebedarf allein zu decken, so wird das Mischventil 4 nach einiger Zeit in die "Zu"-Stellung fahren. Dadurch werden Verzögerungsglied 17 und 18 desaktiviert, d. h. sie werden nach den vorgewählten Zeiten abfallen. Hierbei muß das Verzögerungsglied 17 jedoch immer eine längere Nachlaufzeit besitzen als 18. Wenn Verzögerungsglied 18 abfällt, wird gleichzeitig das Relais 22 desaktiviert, d. h. der Brenner 3 wird gesperrt und kann erst wieder nach Aktivierung von Verzögerungsglied 21 freigegeben werden. Nach Abfall von Verzögerungsglied 17 geht dann zuletzt auch die Wärmepumpenanlage 7 außer Betrieb. Die Zu- bzw. Abschaltung des Brenners 3 und somit der Heizkesselanlage 1 erfolgt demnach lastabhängig und ermöglicht somit einen maximalen Arbeitsanteil der Wärmepumpenanlage 7 an der Jahresheizarbeit.

Ausführungsform nach Fig. 4 und 5:

Die Regelung nach Fig. 4 und 5 ist - im Gegensatz zur Regelung nach Fig. 2 und 3 - eine der konventionellen Heizungsregelung voll unter-

10

lagerte Regelung, da vom Regler 10 Mischventil 4, Brenner 3, Wärmepumpenanlage 7 und Heizungsumwälzpumpe 12 direkt angesteuert werden
(Fig. 4). Die Interpretation der Mischimpulse, die von der konventionellen Regeleinrichtung ausgegeben werden, erfolgt mittels eines
Schaltwerkes 15 mit Steuerwelle 16 (Fig. 5). Um eine Fehlfunktion aufgrund unterschiedlicher Phasen zu vermeiden, ist es notwendig, die
Stromversorgung der konventionellen Heizungsregelung aus dem Regler
10 bereitzustellen. Wird von der konventionellen Heizungsregelung
Wärme angefordert, d. h. werden Mischventil-Auf-Impulse ausgegeben,
so wird das Schaltwerk des Reglers 10 in Richtung "VOR" drehen.
Nach einiger Zeit wird zunächst die Heizungsumwälzpumpe 12 über
Steuerkontakt 23 anlaufen. Die Ansteuerung dieser Heizungsumwälzpumpe 12 ist für die Funktion des Reglers 10 nicht bedeutsam und
stellt lediglich eine Optimierung des Energieeinsatzes in der Übergangszeit dar. Werden weitere Mischventil-Auf-Impulse ausgegeben,
so wird zunächst Steuerkontakt 24 geschlossen und danach Steuerkontakt
25. Durch Schließen von Steuerkontakt 25 geht Relais 22 über Steuerkontakt 24 in Selbsthaltung sofern dies nicht über den Sicherheitstemperaturbegrenzer der Wärmepumpenanlage 7 verhindert wird. Die
Wärmepumpenanlage 7 wird aktiviert. Ist die Wärmepumpenanlage 7
in der Lage, den Heizwärmebedarf allein zu decken, wird das Schaltwerk durch Mischventil-Zu-Impulse der konventionellen Heizungsregelung
wieder zurückgestellt. Hierbei öffnet sich zuerst der Steuerkontakt 25.
Da Relais 22 in Selbsthaltung ist, ändert sich zunächst nichts am
Betriebszustand der Anlage. Erst wenn Steuerkontakt 24 geöffnet wird,
fällt Relais 22 ab, und die Wärmepumpenanlage 7 geht außer Betrieb.
Die Ansteuerung der Wärmepumpenanlage 7 über die zeitversetzten
Steuerkontakte 24 und 25 bewirkt eine Mindestlaufzeit, die zu häufiges
Schalten verhindert. Kann die Wärmepumpenanlage 7 den Gebäudewärmebedarf nicht mehr allein decken, so wird das Schaltwerk 15 durch
ständiges Mischventil-Auf-Impulse derart vorgestellt, daß Steuerkontakt

**Andrejewski, Honke & Partner, Patentanwälte in Essen**

11

26 geschlossen wird. Dadurch wird der Brenner 3 freigegeben. Da hierdurch noch keine Anhebung der Vorlauftemperatur erfolgen kann - das Mischventil 4 wird über Öffner von Relais 27 völlig in Zu-Stellung gehalten - wird durch weiteres Vorstellen des Schaltwerkes 15 auch der Steuerkontakt 28 geschlossen. Dadurch zieht Relais 27 an und das Mischventil 4 kann durch die konventionelle Heizungsregelung angesteuert werden. Die Heizkesselanlage 1 kann somit Wärme abgeben und zur Wärmebedarfsdeckung beitragen. Ist die Wärmepumpenanlage 7, die ständig parallel mitbetrieben wird - es sei denn EVU-Sperrzeiten, zu hohe Heizwasserrücklauftemperatur, zu geringer Heizwasservolumenstrom oder minimale Wärmequellentemperatur verhindern dies - erneut in der Lage, den Wärmebedarf des Gebäudes allein zu decken, so wird das Schaltwerk 15, welches immer parallel zum Mischventil 4 weiter mitbewegt wird, Steuerkontakt 28 wieder öffnen. Hierdurch fällt Relais 27 ab und das Mischventil 4 fährt über den Öffner von Relais 27 wieder völlig zu. Die Heizkesselanlage 1 kann jetzt keine Wärme mehr abgeben, bleibt jedoch weiterhin freigegeben, da kurzzeitige Schwankungen von Außen- und Vorlauftemperatur auftreten können. Erst wenn über längere Zeit weiterhin Mischventil-Zu-Impulse abgegeben werden, wird Steuerkontakt 26 geöffnet und der Brenner 3 desaktiviert. Bei Ausgabe weiterer Mischventil-Zu-Impulse geht auch die Wärmepumpenanlage 7 über die Kontakte 25 und 24 wieder außer Betrieb. - Auch in der Ausführungsform nach den Fig. 4 und 5 ist somit eine lastabhängig geregelte Zuschaltung des Kessels möglich, sowie paralleler, teilparalleler und alternativer Wärmepumpenbetrieb.

12

Patentansprüche

1. Verfahren zur Regelung einer bivalenten Heizungseinrichtung mit

Heizkesselanlage mit von einem Heizkesselthermostat überwachtem Brenner,

Mischventil und Mischventilstellmotor, mit der Heizkesselanlage über das Mischventil verbundenem Wärmeverteilungssystem,

Wärmepumpenanlage und

elektronischer, witterungsgeführter Regeleinrichtung,

welche Regeleinrichtung abhängig von der Außenlufttemperatur nach einem von einer Heizkurve eingestellten Sollwert die Heizwasservorlauftemperatur des Wärmeverteilungssystems regelt, wobei der Heizwasserrücklauf über die Wärmepumpenanlage dem Mischventil zugeführt ist, wobei die Wärmepumpe aktivierbar und desaktivierbar ist und wobei fernerhin der Mischventilstellmotor von Aufimpulsen und Zuimpulsen eines Reglers der Regeleinrichtung nach Maßgabe der Abweichungen des Istwertes vom Sollwert bis in eine Aufstellung bzw. bis in eine Zustellung gesteuert wird, d a d u r c h   g e k e n n z e i c h - n e t, daß sowohl die Wärmepumpenanlage als auch der Brenner der Heizkesselanlage von den Aufimpulsen bzw. den Zuimpulsen des Reglers für den Mischventilstellmotor (mittelbar oder unmittelbar) gesteuert werden,

daß bei durch das Mischventil ausgeschaltetem Brenner die Wärmepumpenanlage in Übereinstimmung mit Stellungen des Mischventils und damit nach Maßgabe des Wärmebedarfes des Wärmeverteilungssystems aktiviert und desaktiviert wird, und daß durch Sonderstellungen des Mischventils der Brenner zugeschaltet bzw. abgeschaltet wird, und zwar durch eine Offenstellung des Mischventils, welche die Wärmeabgabe der Wärmepumpe über die Regeleinrichtung durch Anheben der Heizwasservorlauftemperatur nicht mehr beseitigen kann, zugeschaltet, durch eine Zustellung abgeschaltet wird.

2. Verfahren nach Anspruch 1, dadurch gekennzeichnet, daß die Wärmepumpenanlage unmittelbar durch Stellungen des Mischventils aktiviert und desaktiviert wird.

3. Verfahren nach Anspruch 1, dadurch gekennzeichnet, daß die Wärmepumpenanlage von Aufimpulsen bzw. Zuimpulsen des Reglers in Übereinstimmung mit Stellungen des Mischventils aktiviert und desaktiviert wird.

4. Verfahren nach einem der Ansprüche 1 bis 3, dadurch gekennzeichnet, daß die Wärmepumpe von dem Mischventil über ein Verzögerungsglied desaktiviert wird.

5. Verfahren nach einem der Ansprüche 1 bis 4, dadurch gekennzeichnet, daß der Brenner der Heizkesselanlage über ein Verzögerungsglied zugeschaltet wird.

6. Verfahren nach einem der Ansprüche 1 oder 2 sowie 4 und 5 in der Ausführungsform für eine Schaltungsanordnung, bei der das Mischventil und/oder der Mischventilstellmotor Endschalter für die Zustellung sowie die Aufstellung des Mischventils aufweisen, dadurch gekennzeichnet, daß von den Endschaltern elektrische Steuerimpulse abgenommen und von diesen die Wärmepumpenanlage sowie der Brenner gesteuert werden.

7. Verfahren nach einem der Ansprüche 1 oder 2 sowie 4 und 5 in der Ausführungsform für eine Schaltungsanordnung mit an das Mischventil und/oder den Mischventilstellmotor angeschlossener Steuerwelle, dadurch gekennzeichnet, daß von der Steuerwelle ein Schaltwerk mit Steuerkontakten für die elektrische Steuerung der Wärmepumpenanlage bzw. des Brenners betätigt wird.

8. Verfahren nach einem der Ansprüche 1 oder 3 sowie 4 und 5, dadurch gekennzeichnet, daß für die elektrische Steuerung der Wärmepumpenanlage bzw. des Brenners ein elektrisch angetriebenes Schrittschaltwerk vorgesehen und dieses von den Aufimpulsen bzw. Zuimpulsen des Reglers parallel zum Mischventilstellmotor gesteuert wird.

Fig. 1

0226920

Fig. 2

64104

**Fig. 3**

0226920

**Fig. 4**

64104

0226920

Fig. 5